# EUROPEAN PATENT APPLICATION

(11) **EP 1 762 345 A1**
(43) Date of publication of application: **14.03.2007**
(21) Application number: 05108241.0
(22) Date of filing: 08.09.2005
(51) Int. Cl.: B25J 9/16, G06F 9/46

(54) **An industrial robot system comprising a control unit and an external computer**

(71) Applicant: ABB AB, 721 83 Västeras (SE)
(72) Inventor: Willfor, Per, 722 33 Västeras (SE); Dahlgren, Roger, 723 53 Västeras (SE)
(74) Representative: Reyier, Ann-Mari

(57) **Abstract**

An industrial robot system comprising a control unit having a program storage (10) for storing a robot program comprising a series of robot program instructions, and a program executor (11) adapted to execute the stored robot program instructions. The system further comprises an external computer connected to the control unit, having: a program storage (15) for storing an external program procedure including a series of program instructions, and a program executor (15) adapted to execute the program procedure in response to an invocation of the procedure. The program executor (11) is adapted to identify, during execution of the robot program, a call to the external program procedure, based on the stored robot program instructions. The control unit comprises an external procedure handler (12) adapted to send, upon order from the program executor of the control unit, a notifying message containing an invocation to the external program procedure, and the external computer comprises a procedure invoke handler (16) adapted to receive said notifying message from the control unit, and to invoke the procedure in response to the notifying message.

## Description

### FIELD OF THE INVENTION

The present invention relates to an industrial robot system comprising an industrial robot and at least one external computer. The invention further relates to a method for controlling such an industrial robot system.

### PRIOR ART

An industrial robot includes a manipulator and a control unit having means for operating the manipulator. The manipulator is, for example, a movable arm, or a mechanical device that performs the work of the robot. Before an industrial robot is to be put in operation for a certain task, it must be programmed to carry out the task. When programming an industrial robot, a robot language is used. There exist a plurality of different robot languages, since each robot supplier has developed its own robot language. The robot language is formed such that it is simple to use for the robot user, who may be a person without knowledge or experience of programming.

The robot user writes robot programs that describe what the robot is to do. A robot program comprises a series of program instructions written in the robot language. The control unit includes a program storage for storing the robot programs and a program executor for executing the robot programs. The program executor is sometimes also denoted a translator, since it translates the high-level program language of the robot program to a lower-level program language.

However, the processor and memory capacity in the control unit of the robot are limited. In some applications, the need of processor power and memory exceeds what is available in the control unit of the robot. This is, for example, a problem in applications including heavy calculations. Sometimes, specific hardware, such as a field bus or a touch screen for communication with the user, is needed, and the robot is not equipped with this specific hardware.

### OBJECTS AND SUMMARY OF THE INVENTION

The object of the present invention is to find a solution to the above-mentioned problem, which is easy to make use of for the robot user.

According to one aspect of the invention this object is achieved by an industrial robot system as defined in claim 1.

Such an industrial robot system comprises a control unit having a program storage for storing a robot program comprising a series of robot program instructions written in a robot language, a program executor adapted to execute the stored robot program instructions, and an external computer connected to the control unit, having a program storage for storing at least one external program procedure including a series of program instructions and a program executor adapted to execute the program procedure in response to an invocation of the procedure. The program executor of the control unit is adapted to identify, during execution of the robot program, a call to the external program procedure based on the stored robot program instructions of the robot program. The control unit comprises an external procedure handier adapted, upon order from the program executor, to send a notifying message containing an invocation to the external program procedure, and the external computer comprises a procedure invoke handler adapted to receive the notifying message from the control unit, to invoke the procedure in response to the notifying message, and to notify the control unit when the execution of the procedure is completed.

The industrial robot system according to the invention provides a possibility to execute functionality, which should otherwise be a part of the robot program, on an external computer. Thereby the accessible processor power and memory are no longer limited to what is available in the control unit of the robot. For example, heavy computations can be run on the external computer instead of on the robot control unit. The invention makes it possible to create customized functionality on an external computer that is called from a robot program, which is written in a robot language and is executed on the control unit of the robot. The invention makes it possible to delegate work to an external computer having external hardware suitable for carrying out the work. For example, the external procedure generates an output signal to another external equipment.

The invention provides a generic way to create and execute procedure calls on external computers. The external computer is, for example, a teach pendant unit (TPU), for teaching and manually operating the robot, a personal computer, or any other type of computer. The external procedure can be written in any suitable known program language, such as C, C++, or Java, and does not have to be written in the robot language. The invention makes it easy for a user to create new procedures, which are executed on an external computer.

The program executor of the control unit is adapted to identify, during execution of the robot program, a call to the external program procedure based on the stored robot program instructions, for example, by identifying a robot program instruction including a call to the procedure or identifying a predefined key-word in the robot program. According to the invention the external procedure is called from the robot program.

According to one embodiment of the invention, the syntax of the robot language includes a keyword, which is defined to be a call to a procedure located on an external computer. The programmer uses the keyword in the robot program to make a call to the external procedure from the robot program. When the program executor discovers the keyword in the robot program an invocation is sent to the external procedure.

According to another embodiment of the invention the program executor of the control unit is adapted to identify a call to the external program procedure by identifying a robot program instruction including a call to the procedure, for example, a predefined robot instruction. An advantage with this embodiment is that the syntax of the robot language does not need to be changed.

According to an embodiment of the invention, the program storage of the control unit is adapted to store a plurality of external program procedures, each including a series of program instructions for executing steps based on one or more parameters, the external computer comprises a register unit for storing name and address information about the plurality of program procedures, the notifying message contains the name of the procedure, and the procedure invoke handler is adapted to retrieve the address to the procedure to be invoked from the register unit and to invoke the procedure based on the retrieved address. This embodiment makes it possible to have a plurality of external procedures on the same external computer.

According to an embodiment of the invention the control unit comprises a memory location in which input parameters to the procedure are stored and to which output parameters from the procedure shall be returned, and the notifying message includes the address to the memory location. In this embodiment the parameters are not included in the procedure invoke; instead the procedure invoke includes an address to a memory location where the input parameters are stored and where the output parameters, as a result of the execution of the procedure, shall be returned. By the address to the memory location is meant any known way to show how to find the memory location, for example, a pointer to the memory location, an index, an ID, or a resource locater, such as an URL (Uniform Resource Locater). Advantages gained with this embodiment are for example:
1) It is possible for the external procedure to retrieve local as well as global variables from the control unit.
2) New updated values of the parameters can be retrieved after the procedure call has been made.
3) As values are only retrieved when they are needed and only values that are needed are retrieved, the bandwidth of the communication between the external computer and the control unit is reduced, particularly when data is complex.
4) It is possible to handle different versions of control unit procedures in the same external procedure.
5) The number of parameters is not fixed, which means that the number of parameters can easily be increased.

According to an embodiment of the invention the control unit comprises an execution stack, and the memory location is a part of the execution stack. The notifying message includes information about where to find the part of the execution stack where the input parameters are stored and where the output parameters shall be returned. Preferably, information about where to find the part of the execution stack where the input parameters are stored is in the form of a uniform resource locator (URL). A robot program normally comprises several program modules. Preferably, this information includes an address to an activation record of the stack that comprises stored information about the calling robot program, and/or the calling program module of the robot program. Thanks to the fact that the notifying message includes this information, the external procedure gets access to the contents of the stack belonging to the calling program, such as the input parameters to the procedure as well as local variables and other data of the calling robot program.

According to an embodiment of the invention said notifying message includes information about which robot program, or which part of the robot program, i.e. which module of the robot program, made the call to the external procedure. This information, for example, includes the name of the robot program that called the external procedure. If the call was made from an internal procedure of the robot program, the name of the internal procedure is also included in the notifying message. An internal procedure is a procedure of the robot program, which is stored on the control unit of the robot. An advantage with this embodiment is that it makes it possible for the external procedure to get access to global variables and data belonging to the calling program or program procedure.

According to an embodiment of the invention, the robot program comprises an internal procedure written in the robot language and including a call to the external procedure. The robot program includes a call to the internal procedure. Preferably, the internal procedure has the same input and output parameters as the external procedure to be invoked. When the program executor of the control unit executes the call for the internal procedure, an activation record including information about parameters, variables and local data of the internal procedure is created and put on the stack. The notifying message to the external computer includes information about the location of the activation record on the stack. This embodiment makes it easy and intuitive for the programmer to program a call to an external procedure.

According to an embodiment of the invention the robot language comprises a predefined instruction for calling an external procedure, and the program executor of the control unit is adapted to identify a call to the external program procedure by identifying the predefined instruction. This embodiment makes it easy for a programmer to include a call to an external procedure in the robot program by simply including the predefined instruction in the internal procedure mentioned above. If the internal procedure including the call to the external procedure is provided with the same name as the external procedure to be invoked, no name need to be added to the call and the programming will then be further simplified.

According to an embodiment of the invention the external procedure handler is adapted to include the address to the memory location in the notifying message, the procedure invoke handler is adapted to provide the procedure with the address to the memory location, and the external procedure is adapted to read input parameters from and write output parameters to the memory location. In this embodiment the external procedure reads input parameters from and writes output parameters to the memory location. Thus, the program code of the external procedure includes read and write commands to the memory location. An advantage with this embodiment is that the time it takes to invoke the procedure is reduced.

According to an embodiment of the invention the external procedure handler is adapted to include the address to the memory location in the notifying message, the procedure invoke handler is adapted to read input parameters from the memory location based on the address to the memory location, to provide the procedure with the input parameters, to receive output parameters from the procedure and to write the output parameters to the memory location. In this embodiment the procedure invoke handler of the external computer is adapted to read input parameters from the memory location and provide the procedure with the parameters upon invoke of the procedure, to receive output parameters from the procedure and to write the output parameters to the memory location. An advantage with this embodiment is that the program code of the external procedure becomes less complicated.

According to an embodiment of the invention the system comprises more than one external computer connected to the control unit, and the external procedure handler is adapted to send the notifying message as an event to external computers subscribing thereto. When a procedure call to an external computer is executed on the control unit an event is sent to external computers subscribing to it. The event contains information about the name of the procedure. The external computers receiving the event are adapted to check the procedure name and to determine if they host the procedure for which the inquire is made. The external computers are adapted to send an acknowledge message to the control unit if they host the procedure inquire for. Thus, the control unit does not have to know the address to the external computer hosting the procedure, thereby providing an automatic invoke procedure.

According to an embodiment of the invention the notifying message includes the values of the input parameters, and the procedure invoke handler is adapted to generate a result message to the control unit including the values of the resulting parameters. In this embodiment the values of the parameters are transferred between the control unit and the external computer via messages.

According to another aspect of the invention this object is achieved by a method for controlling an industrial robot system as defined in claim 15.

According to a further aspect of the invention, the object is achieved by a computer program directly loadable into the internal memory of a computer, comprising software code portions for performing the steps of the method according to the invention, when the program is run on the computer. The computer program is provided either on a computer-readable medium or through a network. The software necessary for implementing the present invention is provided on the robot controller and on the external computer.

According to another aspect of the invention, the object is achieved by a computer-readable medium having a program recorded thereon, when the program is to make a computer perform the steps of the method according to the invention, and the program is run on the computer.

### BRIEF DESCRIPTION OF THE DRAWINGS

The invention will now be explained more closely by the description of different embodiments of the invention and with reference to the appended figures.
- Fig. 1: shows an industrial robot connected to a plurality of external computers.
- Fig. 2: shows a block diagram of an industrial robot system according to one embodiment of the invention.
- Fig. 3: shows a block diagram of an industrial robot system according to another embodiment of the invention.
- Fig. 4: shows a flow diagram of a method for controlling an industrial robot system according to one embodiment of the invention.

### DETAILED DESCRIPTION OF PREFERRED EMBODIMENTS OF THE INVENTION

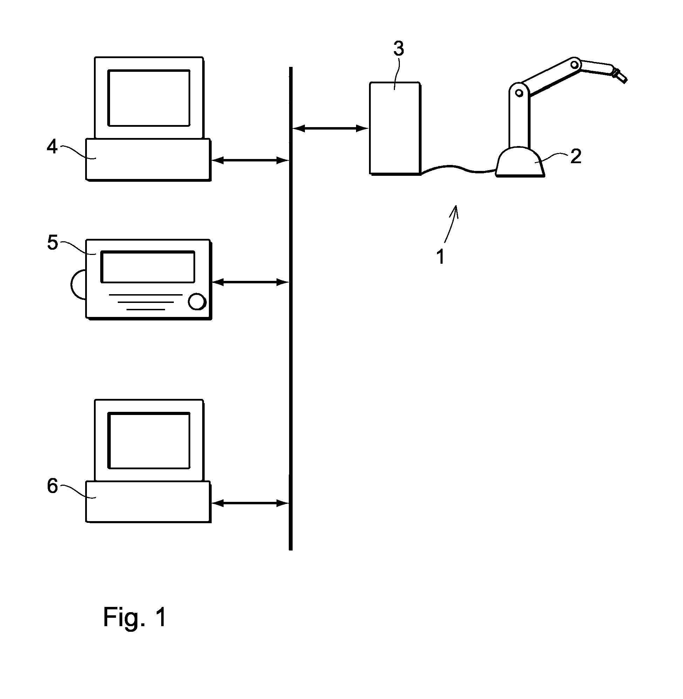

Figure 1 shows an industrial robot 1 comprising at least one manipulator 2 and a control unit 3 for controlling the movement of the manipulator/manipulators. The control unit of the robot comprises hardware as well as software for controlling the manipulator. The hardware of the control unit comprises data processor means such as input and output means, processor units, such as a central processing unit (CPU), and memory means, such as ROM and RAM. The control unit of the robot is connected to a plurality of external computers 4,5, 6, for example, through a network or a bus connection. In this example the external computers are a personal computer (PC) 4, a teach pendant unit (TPU) 5, for teaching and manual the operating the robot, and a workstation 6. According to one embodiment of the invention it is possible to run external procedures stored on the external computers 4, 5, 6 from the control unit 3 of the robot.

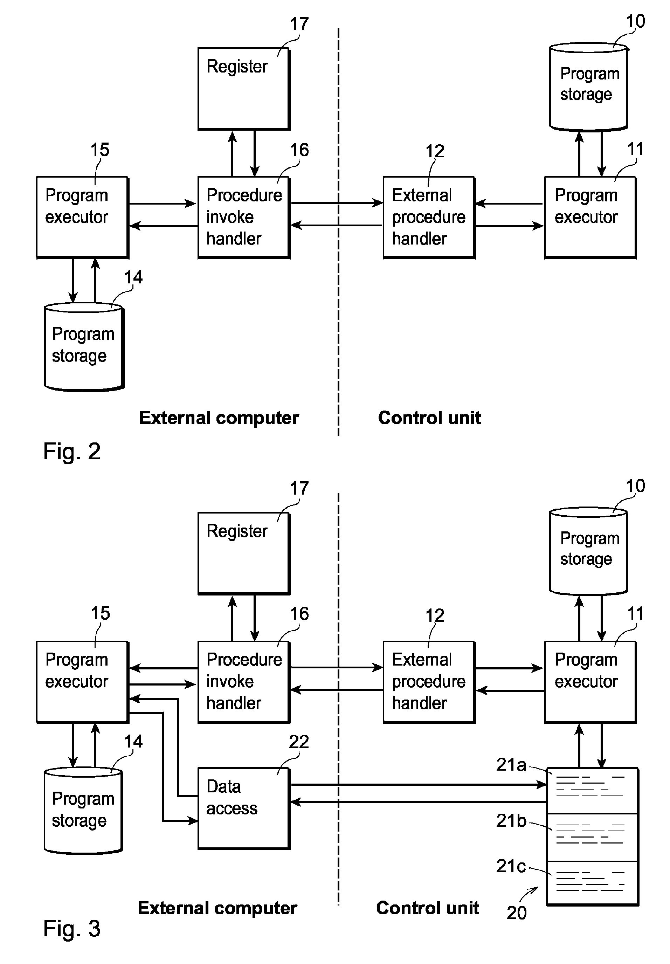

Figure 2 shows a block diagram of an industrial robot system according to a first embodiment of the invention. The control unit 3 of the robot comprises program storage 10 for storing robot programs comprising series of robot program instructions written in a robot language, and a program executor 11 adapted to execute the stored robot program instructions. The control unit 3 further comprises an external procedure handler 12 adapted, upon order from the program executor 11, to send a notify message containing an invocation to an external program procedure stored on an external computer connected to the control unit. The external computer comprises program storage 14 for storing external program procedures including a series of program instructions.

External program procedures can be written in any suitable known program language and does not have to be written in the robot language. The external computer further comprises a program executor 15 adapted to execute the program procedures in response to an invocation of the procedure. The external computer also comprises a procedure invoke handler 16 adapted to receive the notifying message from the control unit, to invoke the procedures in response to the notify message, and to notify the control unit when the execution of the procedure is completed. The procedure invoke handler 16 and the external procedure handler 12 are adapted to communicate with each other, for example, via a network or any other known communication means.

The program storage 14 is adapted to store a plurality of external program procedures. The external computer comprises a register unit 17 for storing name and address information about the external program procedures stored in the program storage 14. A notifying message from the control unit of the robot contains the name of the external procedure to be invoked. The procedure invoke handler 16 is adapted to retrieve the address to the procedure to be invoked from the register unit 17 based on the name of the procedure, and to invoke the procedure based on the retrieved address.

The program executor 11 of the control unit is adapted to identify, during execution of the robot program, a call to an external program procedure based on the store robot program instructions. In some cases the external program procedures require input parameters and other variables from the control unit to be able to execute the program procedure. The external program procedures may also produce output parameters as a result of the execution. In that case input parameters and other variables necessary for the execution of the external program have to be transferred from the control unit to the external computer.

In this embodiment the external procedure handler 12 transforms input parameters to the external procedure into a suitable format for being transferred to the external computer, and then includes the input parameters in the notifying message to the external computer. The procedure invoke handler 16 is adapted to receive the notifying message including the input parameters and to transform the input parameters into a format suitable for execution by the external program procedure. The procedure invoke handler is also adapted to receive output parameters from the program procedure and to transform them into a format suitable for being transferred to the control unit. The procedure invoke handler is adapted to generate a result message to the control unit including the values of the output parameters. The external procedure handler 12 is adapted to receive the result message from the procedure invoke handler 16, to transform the output parameters to a format suitable for the robot program, and to transfer the input parameters to the program executor 11.

Figure 3 shows a block diagram of an industrial robot system according to a second embodiment of the invention. As in figure 2, the control unit comprises a program storage 10 for storing robot programs, a program executor 11 for executing the robot programs, and an external procedure handler 12 adapted to communicate with an external computer. The external computer comprises a program storage 14 for storing external program procedures, a program executor 15 for executing the external program procedures, a procedure invoke handler 16 for communicating with the control unit, and a register unit 17 for storing information about the stored external program procedures.

The embodiment shown in figure 3 differs from the embodiment shown in figure 2 in that the input and output parameters are no longer included in the notifying message and are thus no longer transferred between the external procedure handler 12 and the procedure invoke handler 16. Instead the parameters are stored in a memory location on the control unit. In this embodiment the memory location is a part of an execution stack 20 of the control unit. Instead of containing the values of the parameters, the notifying message includes information about where to find the parameters, i.e. the address to the part of the stack where the input parameters are stored and where the output parameters resulting from the execution of the program procedure should be stored. For example, it is advantageous to include a uniform resource locator (URL) pointing to the part of the stack where the parameters are located. Alternatively, a global, unique identifier (GUID) can be included.

Each time the robot program makes a call to an internal procedure of the robot program, information about the call is stored as an activation record 21a-21c on the stack 20. When the internal procedure has been executed and is finished the activation record for the procedure call is removed from the stack 20. An activation record is a memory location on the stack containing information about a procedure call, such as the parameters and local variables of the procedure and other data related to the procedure.

In this embodiment the external computer is provided with a data access module 22 adapted to read and write data to and from the stack 20 of the control unit upon order from the program executor 15. The data access module 22 provides the program executor 15 with input parameters to the external program procedure and stores resulting output parameters to the stack 20.

When more than one computer is connected to the control unit of the robot, it is possible to store external program procedures on more than one external computer. If an external computer has an external procedure belonging to the control unit stored on it, the external computer should subscribe to notifying messages from external procedure handler 12. When a call to an external procedure has been identified a notifying message, including the name of the external procedure to be invoked, is sent to all external computers subscribing thereto. The procedure invoke handlers 16 of the external computers are adapted to check with the register unit 17 if they have an implementation for the requested program procedure when they receive the notifying message. The external computer then sends an acknowledge message to the control unit telling it whether it has an implementation for the requested procedure or not. If an implementation is not available on any of the external computers mentation is not available on any of the external computers the execution on the control unit either continues, or stops with an error log. If an implementation for the procedure is available on one of the external computers execution of the robot program will wait for another message from the external computer telling it that the execution of the external procedure has been completed.

The notifying message contains information about the name of the procedure to be invoked and a URL to the execution stack. This information may, for example, include a stack-ID, which is a unique identifier that points out the location of the stack. Stack ID is a variable that holds information about the address of the activation record in which the input and output parameters are stored.

As an example the URL may contain the following information:
1) An identification of the control unit,
2) an identification of an domain on the control unit,
3) the name of the program and/or part of the program which made the call to the external computer
4) stack ID.

The URL may also contain information about which program module of the robot program made the call to external procedure and the name of global data of the robot program being executed. This information is important in case the external program procedure needs information about global data of the robot program and thus makes it possible for the data access module 22 to retrieve global variables stored on the control unit.

Before the external procedure is invoked, an activation record with the input parameters to the procedure and a place dedicated for the output parameters must be created and stored on the stack. In the following an advantageous way of creating such an activation record is described. In this example the robot language is provided with a predefined instruction for calling an external procedure. For example, the predefined instruction is named "REMOTE CALL". When the program executor 12 recognizes the instruction "REMOTE CALL" in the robot program, a call to the external program procedure is identified.

When a robot program is to include a call to a program procedure on an external computer, an internal procedure, corresponding to the external procedure, is added to the robot program. The internal procedure includes a call to the external procedure. In this embodiment the internal procedure includes the instruction "REMOTE CALL". The internal procedure should also be provided with the same input and output parameters as the external procedure to be invoked. The internal procedure may also comprise other data to be used by the external procedure. It is advantageous if the internal procedure is provided with the same name as the external procedure to which it corresponds. This makes it easier and more intuitive for the programmer to program a call to on external procedure.

A call to an external procedure is made by including a call to the internal procedure corresponding to the external procedure in the robot program. The robot program will then include a call to an internal procedure with the same name as the external procedure to be invoked. When the call to the internal procedure is executed an activation record is created including information about the input and output parameters and local variables of the internal procedure, which are the same as for the external procedure. The activation record is stored on the stack in the control unit. When the activation record has been stored on the stack, the internal procedure is executed and the program executor will identify the instruction "REMOTE CALL" in the procedure. Upon identifying the call to the external procedure, the program executor instructs the external procedure handler 12 to produce a notifying message including an invocation to external program procedure with the same name as the internal program procedure. The notifying message will also contain information about the address to the activation record of the internal procedure.

In the following an example of a call to an external procedure will be described. The object of the external procedure in this example is to calculate the area A of a circle with a radius r. The external procedure is, for example, written in a non-robot language. This is an example of an external procedure:
PROC calc
   read r
   read pi
   A=r² * pi
   write A
END PROC

In this example parameters are read by the external procedure. In an alternative embodiment, the parameters could be provided by the procedure invoke handler:
PROC calc (A,r,pi)
   A=r² * pi
END PROC

An internal program procedure with the same name is written in a robot language;
PROC calc(A,r)
   Var:pi
   REMOTE CALL
END PROC

The robot program includes at least one call to the internal procedure calc:
MAIN PROGRAM
...
CALL calc(A,r)
...
END PROGRAM

In such a way a memory location for input and output parameters and other data to the external procedure is created in a natural way and it is easy for a programmer to make a call for an external procedure. The main program and the internal procedure may contain more instructions before and after the procedure call, for example, to check if the value returned from the external procedure is reasonable.

In the program example above, the external program procedure is provided with read instructions for reading the input parameter r and the local variable pi from the activation record on the stack, and a write instruction for writing the output parameter A to the activation record on the stack. The program executor 15 of the external computer instructs the data access module 22 to retrieve the input parameters and variables, and to store the output parameters to the stack. However, in another embodiment the procedure invoke handler 16 is adapted to order the data access module 22 to read and write parameters to the stack. In this embodiment the procedure invoke handler 12 orders the data access module to retrieve input parameters and data to the procedure before it invokes the procedure. When the input parameters are retrieved from the stack, the procedure invoke handler 16 sends an invocation message including an instruction to invoke the external procedure to the program executor 15. This invoke message may also include the input parameters and variables to the procedure. When the execution of the external procedure is finished the program executor 15 sends an end of execution message to the procedure invoke handler 16 including information about the fact that execution is finished and the values of the output parameters. The procedure invoke handler 16 orders the data access module 22 to store the output parameters on the stack 20.

The blocks in the diagram shown in figure 2 and 3 can be implemented by software, hardware or a combination thereof.

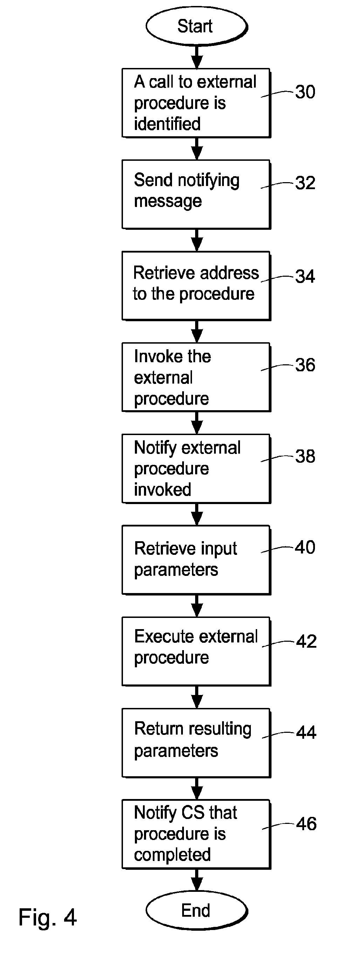

Figure 4 is a flow chart illustration of a method and a computer program product according to an embodiment to the present invention. It will be understood that each block of the flow chart can be implemented by computer program instructions.

During programming of a robot the programmer stores one or more external program procedures in program storages 14 on one or more external computers. When an external program procedure is stored on one of the external computers, the name of the procedure and the address to the program code of the procedure are stored in the register unit 17. The robot program is stored in the program storage 10 of the control unit of the robot. The robot program includes one or more calls to the external procedures stored on the external computer. When the robot program is run, the program executor 11 executes the stored robot program instructions and the program executor 11 will identify a call to the external procedure, block 30. The call is, for example, identified when the program executor identifies a robot program instructions including a call to the external procedure, or when the program executor identifies a predefined keyword in the robot program, which corresponds to a call to an external program procedure.

When the program executor has identified a call to an external program procedure, a notifying message containing an invocation to external program procedure is sent as an event to the external computers subscribing thereto, block 32. When the external computers receives the notifying message they check the register unit 17 to see whether it contains the requested program procedure. If so the address to the program procedure is retrieved from the register unit, block 34. The external procedure is invoked, block 36. When the external procedure has been invoked the control unit is notified about the fact that the external procedure requested has been invoked, block 38.

During execution of the external procedure input parameters and other data are retrieved from the stack of the control unit. The address to the part of the stack that holds the input data was contained in the received notifying message. The external procedure is executed, block 42, and after execution the resulting output parameters are returned to the stack of the control unit, block 44. When the execution of the external procedure is completed and the output parameters are stored in the stack, a message is sent to the control unit informing it about the fact that the external program execution is completed, block 46. When the control unit receives this message, the execution of the robot program is resumed.

## Claims

1. An industrial robot system comprising a control unit (3) having a program storage (10) for storing a robot program comprising a series of robot program instructions written in a robot language, and a program executor (11) adapted to execute the stored robot program instructions, **characterized in that**:
- the system further comprises an external computer (4,5,6) connected to the control unit, having:
o a program storage (15) for storing at least one external program procedure including a series of program instructions, and
o a program executor (15) adapted to execute the program procedure in response to an invocation of the procedure,
- wherein the program executor (11) of the control unit is adapted to identify, during execution of said robot program, a call to said external program procedure, based on the stored robot program instructions,
- the control unit comprises an external procedure handler (12) adapted, upon order from the program executor of the control unit, to send a notifying message containing an invocation to the external program procedure, and
- the external computer comprises a procedure invoke handier (16) adapted to receive said notifying message from the control unit, to invoke the procedure in response to the notifying message, and to notify the control unit when the execution of the procedure is completed.

2. The industrial robot system according to claim 1, wherein said program storage (14) on the external computer is adapted to store a plurality of external program procedures, each including a series of program instructions, the external computer comprises a register unit (17) for storing name and address information about said plurality of external program procedures, said notifying message contains the name of the external procedure, and said procedure invoke handler (12) is adapted to retrieve the address to the procedure to be invoked from the register unit and to invoke the procedure based on the retrieved address.

3. The industrial robot system according to claim 1 or 2, wherein the program executor of the control unit is adapted to identify a call to the external program procedure by identifying a robot program instruction including a call to the procedure, or identifying a predefined key-word in the robot program.

4. The industrial robot system according to any of the previous claims, wherein said external program procedure includes a series of program instructions for executing steps based on one or more input parameters and for producing one or more output parameters, said notifying message contains information about the parameters, and the procedure invoke handler is adapted to provide the external procedure with said information about the parameters.

5. The industrial robot system according to claim 4, wherein the control unit comprises a memory location (21a-21c) in which input parameters to the external procedure are stored and to which output parameters from the external procedure shall be returned, and said notifying message includes an address to said memory location.

6. The industrial robot system according to claim 5, wherein the control unit comprises an execution stack (20), said memory location is a part of the execution stack, and said notifying message includes information about where to find said part of the execution stack.

7. The industrial robot system according to claim 5 or 6, wherein said notifying message includes information about which robot program, and/or part of the robot program made the call to the external procedure.

8. The industrial robot system according to claim 6 or 7, wherein said address is in the form of a uniform resource locator (URL).

9. The industrial robot system according to any of claims 6-8, wherein the robot program comprises:
- an internal procedure written in the robot language including a call to the external procedure to be invoked, and
- a call to said internal procedure.

10. The industrial robot system according to claim 9, wherein the robot language comprises a predefined instruction for calling an external procedure, the program executor of the control unit is adapted to identify a call to the external program procedure by identifying said predefined instruction, and said internal procedure includes said predefined instruction for calling the external procedure.

11. The industrial robot system according to any of claims 5-10, wherein the procedure invoke handler (16) is adapted to provide the external procedure with the address to said memory location, and the external procedure is adapted to read input parameters from and write output parameters to said memory location.

12. The industrial robot system according to any of claims 5-11, wherein the procedure invoke handler (16) is adapted to read input parameters from the memory location based on the address to the memory location, to provide the external procedure with the input parameters, to receive output parameters from the external procedure, and to write the output parameters to said memory location.

13. The industrial robot system according to any of the previous claims, wherein the system comprises a plurality of external computers connected to the control unit, and the external procedure handler is adapted to send said notifying message as an event to external computers subscribing thereon.

14. The industrial robot system according to claim 4, wherein said notifying message includes the values of the input parameters, and the procedure invoke handler is adapted to generate a result message to the control unit including the values of the output parameters.

15. A method for controlling an industrial robot system comprising a control unit for controlling the robot and an external computer connected to the control unit, wherein the method comprises
- storing in the control unit a robot program including a series of robot program instructions written in a robot language,
- storing on the external computer at least one external program procedure including a series of program instructions,
- running the robot program by executing the stored robot program instructions,
- identifying a call to said external program procedure based on the stored robot program instructions during execution of the robot program,
- sending a notifying message containing an invocation to the external program procedure upon identifying a call to the external program procedure,
- executing the external procedure, and
- notifying the control unit when the execution of the external procedure is completed.

16. The method according to claim 15, wherein the method comprises
- storing a plurality of external program procedures, each including a series of program instructions for executing steps based on one or more parameters, in said external computer,
- storing name and address information about said plurality of external program procedures in a register unit, wherein said notifying message contains the name of the external procedure,
- retrieving the address to the external procedure to be invoked from the register unit based on the name contained in the notifying message, and
- invoking the external procedure based on the retrieved address.

17. The method according to claim 15 or 16, wherein said identifying of a call to the external program procedure comprises identifying a robot program instruction including a call to the external procedure or identifying a predefined key-word in the robot program.

18. The method according to any of the claims 15-17, wherein, said external program procedure includes a series of program instructions for executing steps based on one or more input parameters and for producing one or more output parameters, said notifying message contains information about the parameters, and the method further comprises: providing the external procedure with said information about the parameters, and providing the control unit with output parameters from the external procedure.

19. The method according to claim 18, wherein said notifying message includes an address to a memory location in which the input parameters to the external procedure are stored and to which the output parameters from the external procedure shall be returned.

20. The method according to claim 19, wherein the control unit comprises an execution stack, said memory location is a part of the execution stack, and said notifying message includes information about where to find said part of the execution stack.

21. The method according to claim 19 or 20, wherein said notifying message includes information about which robot program, and/or which part of the robot program made the call to the external procedure.

22. The method according to any of claims 19-21, wherein the robot program comprises:
- an internal procedure written in the robot language including a call to the external procedure to be invoked, and
- a call to said internal procedure.

23. The method according to claim 22, wherein the robot language comprises a predefined instruction for calling an external procedure, said internal procedure includes said predefined instruction, and said identifying of a call to the external program procedure comprises identifying said predefined instruction.

24. The method according to any of claims 19-23, wherein the method comprises reading the input parameters to the external procedure from said memory location, and writing the output parameters from the external procedure to said memory location.

25. The method according to any of claims 19-24, wherein the system comprises a plurality of external computers connected to the control unit, and the method comprises sending said notifying message as an event to external computers subscribing thereon.

26. The method according to claim 18, wherein said notifying message includes the values of the input parameters to the external procedure, and the method comprises sending a result message to the control unit including the values of the output parameters from the external procedure.

27. A computer program directly loadable into the internal memory of a computer, comprising software for performing the steps of any of claims 15-26.

28. A computer readable medium, having a program recorded thereon, where the program is to make a computer perform the steps of any of claims 15-28, when said program is run on the computer.

## Amended claims

### Amended claims in accordance with Rule 86(2) EPC.

**1.** An industrial robot system comprising:
a control unit (3) having a program storage (10) for storing a robot program comprising a series of robot program instructions written in a robot language, and a program executor (11) adapted to execute the stored robot program instructions, and
an external computer (4,5,6) connected to the control unit, having:
o a program storage (15) for storing at least one external program procedure including a series of program instructions, and
o a program executor (15) adapted to execute the program procedure in response to an invocation of the procedure,
- wherein the program executor (11) of the control unit is adapted to identify, during execution of said robot program, a call to said external program procedure, based on the stored robot program instructions,
- the control unit comprises an external procedure handler (12) adapted, upon order from the program executor of the control unit, to send a notifying message containing
an invocation to the external program procedure, and the external computer comprises a procedure invoke handler (16) adapted to receive said notifying message from the control unit, to invoke the procedure in response to the notifying message, and to notify the control unit when the execution of the procedure is completed, **characterized in that** said external program procedure includes a series of program instructions for executing steps based on one or more input parameters and for producing one or more output parameters, said notifying message contains information about the parameters, and the procedure invoke handler is adapted to provide the external procedure with said information about the parameters, and that the control unit comprises a memory location (21a-21c) in which input parameters to the external procedure are stored and to which output parameters from the external procedure shall be returned, and said notifying message includes an address to said memory location.

**2.** The industrial robot system according to claim 1, wherein said program storage (14) on the external computer is adapted to store a plurality of external program procedures, each including a series of program instructions, the external computer comprises a register unit (17) for storing name and address information about said plurality of external program procedures, said notifying message contains the name of the external procedure, and said procedure invoke handler (12) is adapted to retrieve the address to the procedure to be invoked from the register unit and to invoke the procedure based on the retrieved address.

**3.** The industrial robot system according to claim 1 or 2, wherein the program executor of the control unit is adapted to identify a call to the external program procedure by identifying a robot program instruction including a call to the procedure, or identifying a predefined key-word in the robot program.

**4.** The industrial robot system according to any of the previous claims, wherein the control unit comprises an execution stack (20), said memory location is a part of the execution stack, and said notifying message includes information about where to find said part of the execution stack.

**5.** The industrial robot system according to according to any of the previous claims, wherein said notifying message includes information about which robot program, and/or part of the robot program made the call to the external procedure.

**6.** The industrial robot system according to claim 4 or 5, wherein said address is in the form of a uniform resource locator (URL).

**7.** The industrial robot system according to any of claims 4-6, wherein the robot program comprises:
- an internal procedure written in the robot language including a call to the external procedure to be invoked, and
- a call to said internal procedure.

**8.** The industrial robot system according to claim 7, wherein the robot language comprises a predefined instruction for calling an external procedure, the program executor of the control unit is adapted to identify a call to the external program procedure by identifying said predefined instruction, and said internal procedure includes said predefined instruction for calling the external procedure.

**9.** The industrial robot system according to any of the previous claims, wherein the procedure invoke handler (16) is adapted to provide the external procedure with the address to said memory location, and the external procedure is adapted to read input parameters from and write output parameters to said memory location.

**10.** The industrial robot system according to any of the previous claims, wherein the procedure invoke handler (16) is adapted to read input parameters from the memory location based on the address to the memory location, to provide the external procedure with the input parameters, to receive output parameters from the external procedure, and to write the output parameters to said memory location.

**11.** The industrial robot system according to any of the previous claims, wherein the system comprises a plurality of external computers connected to the control unit, and the external procedure handler is adapted to send said notifying message as an event to external computers subscribing thereon.

**12.** The industrial robot system according to any of the previous claims, wherein said notifying message includes the values of the input parameters, and the procedure invoke handler is adapted to generate a result message to the control unit including the values of the output parameters.

**13.** A method for controlling an industrial robot system comprising a control unit for controlling the robot and an external computer connected to the control unit, wherein the method comprises
- storing in the control unit a robot program including a series of robot program instructions written in a robot language,
- storing on the external computer at least one external program procedure including a series of program instructions,
- running the robot program by executing the stored robot program instructions,
- identifying a call to said external program procedure based on the stored robot program instructions during execution of the robot program,
- sending a notifying message containing an invocation to the external program procedure upon identifying a call to the external program procedure,
- executing the external procedure, and
- notifying the control unit when the execution of the external procedure is completed, **characterized in that**
said external program procedure includes a series of program instructions for executing steps based on one or more input parameters and for producing one or more output parameters, said notifying message contains information about the parameters, and the method further comprises providing the external procedure with said information about the parameters, and providing the control unit with output parameters from the external procedure, and that said notifying message includes an address to a memory location in which the input parameters to the external procedure are stored and to which the output parameters from the external procedure shall be returned.

**14.** The method according to claim 13, wherein the method comprises
- storing a plurality of external program procedures, each including a series of program instructions for executing steps based on one or more parameters, in said external computer,
- storing name and address information about said plurality of external program procedures in a register unit, wherein said notifying message contains the name of the external procedure,
- retrieving the address to the external procedure to be invoked from the register unit based on the name contained in the notifying message, and
- invoking the external procedure based on the retrieved address.

**15.** The method according to claim 13 or 14, wherein said identifying of a call to the external program procedure comprises identifying a robot program instruction including a call to the external procedure or identifying a predefined key-word in the robot program.

**16.** The method according to any of claims 13 - 15, wherein the control unit comprises an execution stack, said memory location is a part of the execution stack, and said notifying message includes information about where to find said part of the execution stack.

**17.** The method according to any of claims 13 - 16, wherein said notifying message includes information about which robot program, and/or which part of the robot program made the call to the external procedure.

**18.** The method according to any of claims 13-17, wherein the robot program comprises:
- an internal procedure written in the robot language including a call to the external procedure to be invoked, and
- a call to said internal procedure.

**19.** The method according to claim 18, wherein the robot language comprises a predefined instruction for calling an external procedure, said internal procedure includes said predefined instruction, and said identifying of a call to the external program procedure comprises identifying said predefined instruction.

**20.** The method according to any of claims 13 - 19, wherein the method comprises reading the input parameters to the external procedure from said memory location, and writing the output parameters from the external procedure to said memory location.

**21.** The method according to any of claims 13 - 20, wherein the system comprises a plurality of external computers connected to the control unit, and the method comprises sending said notifying message as an event to external computers subscribing thereon.

**22.** The method according to any of claims 13 - 21, wherein said notifying message includes the values of the input parameters to the external procedure, and the method comprises sending a result message to the control unit including the values of the output parameters from the external procedure.
